# EUROPÄISCHE PATENTANMELDUNG

(11) **EP 3 167 938 A1**
(43) Veröffentlichungstag der Anmeldung: **17.05.2017**
(21) Anmeldenummer: 16196870.6
(22) Anmeldetag: 02.11.2016
(51) Int. Cl.: A62C 3/16, H02B 1/28

(54) **BRANDSCHUTZEINRICHTUNG**

(30) Priorität: 13.11.2015 DE 102015119624
(71) Anmelder: PRIORIT AG, 63457 Hanau (DE)
(72) Erfinder: Müller-Otto, Jens, 08427 Fraureuth (DE)
(74) Vertreter: Wolf, Michael

(57) **Zusammenfassung**

Die Erfindung betrifft eine Brandschutzeinrichtung, umfassend einen einen Brandabschnitt (1) bildenden Raum, in dem ein eine sicherheitstechnische Anlage (2) aufnehmendes und sowohl mit einer Be- als auch mit einer Entlüfungsöffnung (3) versehenes Brandschutzgehäuse (4) angeordnet ist. Nach der Erfindung ist vorgesehen, dass die auch im Brandfall unverschlossenen Beund Entlüftungsöffnungen (3) jeweils mit einem in einen weiteren, außerhalb des Raumes angeordneten Brandabschnitt (5) ausmündenden Be- und Entlüftungskanal (6) verbunden sind.

## Beschreibung

Die Erfindung betrifft eine Brandschutzeinrichtung gemäß dem Oberbegriff des Patentanspruchs 1.

Eine Brandschutzeinrichtung der eingangs genannten Art ist zum Beispiel aus dem deutschen Gebrauchsmuster DE 201 16 667 U1 bekannt. Diese Brandschutzeinrichtung besteht insbesondere aus einem einen Brandabschnitt bzw. feuerwiderstandsfähigen Raumbereich bildenden Raum, in dem ein eine sicherheitstechnische Anlage aufnehmendes und sowohl mit einer Be- als auch mit einer Entlüfungsöffnung versehenes Brandschutzgehäuse angeordnet ist.

Unter einem Brandabschnitt bzw. feuerwiderstandsfähigen Raumbereich ist dabei im Rahmen dieser Anmeldung (vgl. https://de.wikipedia.org/w/index.php?title=Brandabschnitt&ol-did=146385713) ein Bereich zu verstehen, der im Schadensfall (Brandfall) bestimmungsgemäß ausbrennt und somit keinen Feuerüberschlag auf andere Brandabschnitte zulassen darf.

Unter einem Brandschutzgehäuse ist im Rahmen dieser Anmeldung (vgl. http://www.brandschutz-wiki.de/index.php?title=Brandschutzgeh%C3%A4use&oldid=3910) ein Gehäusesystem zu verstehen, welches dem Funktionserhalt bzw. der Brandlastdämmung von elektrischen Einrichtungen im Brandfall dient.

Bei der oben genannten Lösung ist insbesondere an den Be- und Entlüftungsöffnungen, also den Öffnungen, über die Luft aus dem Raum bzw. Brandabschnitt in das Brandschutzgehäuse ein- und umgekehrt austritt, eine im Brandfall aufschäumende und damit die Lüftungsöffnung verschließende Brandschutzdichtung vorgesehen, d. h. es ist im Brandfall dafür gesorgt, dass die im Brandschutzgehäuse angeordnete sicherheitstechnische Anlage zumindest noch eine gewisse Zeit funktionstüchtig bleiben kann.

Zum konkreten Nachweis dieses Funktionserhalts sind dabei derzeit für jede Kombination aus Brandschutzgehäuse und sicherheitstechnischer Anlage kostenintensive, sogenannte Brand-Typprüfungen erforderlich.

Der Erfindung liegt die Aufgabe zugrunde, eine Brandschutzeinrichtung der eingangs genannten Art zu verbessern. Insbesondere soll eine Brandschutzeinrichtung mit einem erheblich reduzierten Aufwand hinsichtlich des Nachweises des Funktionserhalts für einen bestimmten Zeitraum geschaffen werden.

Diese Aufgabe ist mit einer Brandschutzeinrichtung der eingangs genannten Art durch die im Kennzeichen des Patentanspruchs 1 aufgeführten Merkmale gelöst.

Nach der Erfindung ist also vorgesehen, dass die auch im Brandfall unverschlossenen Be- und Entlüftungsöffnungen jeweils mit einem in einen weiteren, außerhalb des Raumes angeordneten, feuerwiderstandsfähigen Raumbereich bzw. Brandabschnitt ausmündenden Be- und Entlüftungskanal verbunden sind.

Mit anderen Worten zeichnet sich die erfindungsgemäße Lösung somit dadurch aus, dass das Brandschutzgehäuse nunmehr auch während eines Brandfalles vollständig be- und entlüftet bleibt, und zwar dadurch, dass sowohl für die Zu- als auch für die Abluft Luft eines anderen Brandabschnitts bzw. feuerwiderstandsfähigen Raumbereichs verwendet wird. Dabei ist das Brandschutzgehäuse (sofern seine Tür geschlossen ist) im Unterschied zum vorerwähnten Stand der Technik gegenüber dem Brandabschnitt, in dem es steht, grundsätzlich abgedichtet, also sowohl im Normalbetrieb als auch im Brandfall, d. h. die Be- und Entlüftung des erfindungsgemäßen Brandschutzgehäuses erfolgt grundsätzlich mit Luft aus einem anderen Brandabschnitt. Diese Maßgabe hat dabei zur Folge, dass die oben erwähnten Brand-Typprüfungen komplett entfallen können und nur noch eine Brandprüfung für das Leergehäuse, d. h. unabhängig von der in das Brandschutzgehäuse eingebauten sicherheitstechnischen Anlage und somit letztlich nur noch ein einziges Mal für das Brandschutzgehäuse selbst erfolgen muss, da es für den Fachmann letztlich problemlos ist, die erforderliche Belüftung bzw. Belüftungsseinrichtung entsprechend der im Einzelfall verwendeten sicherheitstechnischen Anlage auszulegen, wobei ein bei der allein für das Brandschutzgehäuse durchgeführte Brand-Prüfungen ermittelter Wärmeeintrag in das Brandschutzgehäuse bei der Auslegung der Belüftung bzw. Belüftungseinrichtung entsprechend berücksichtigt wird.

Nochmals kurz zusammengefasst, können Dank der erfindungsgemäßen Brandschutzeinrichtung die Brand-Typprüfungen für unterschiedliche Kombinationen aus Brandschutzgehäuse und sicherheitstechnischer Anlage komplett entfallen, da durch die Belüftung des Brandschutzgehäuses in einen anderen Brandabschnitt bzw. feuerwiderstandsfähigen Raumbereich dafür gesorgt ist, dass die sicherheitstechnische Anlage auch im Brandfall für eine bestimmte Zeitdauer bestimmungsgemäß weiter betrieben werden kann.

Andere vorteilhafte Weiterbildungen der erfindungsgemäßen Brandschutzeinrichtung ergeben sich aus den abhängigen Patentansprüchen.

Die erfindungsgemäße Brandschutzeinrichtung einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt schematisch im Schnitt
- Figur 1: ein erstes Ausführungsbeispiel der erfindungsgemäßen Brandschutzeinrichtung mit einem bodenstehenden Brandschutzgehäuse, das fluchtend vor dem Belüftungskanal direkt am Trennwandelement bzw. einer Wand positioniert und mit einem verlängerten Entlüftungskanal versehen ist;
- Figur 2: ein zweites Ausführungsbeispiel der erfindungsgemäßen Brandschutzeinrichtung mit einem bodenstehenden Brandschutzgehäuse, das fluchtend vor den Be- und Entlüftungskanälen direkt an einem Trennelement bzw. einer Wand positioniert ist;
- Figur 3: ein drittes Ausführungsbeispiel der erfindungsgemäßen Brandschutzeinrichtung mit einem bodenstehenden Brandschutzgehäuse, das mit Distanz und angepasst verlängerten Be- und Entlüftungskanälen zu einer Wand positioniert ist;
- Figur 4: ein viertes Ausführungsbeispiel der erfindungsgemäßen Brandschutzeinrichtung mit einem wandhängenden Brandschutzgehäuse, das direkt an einer Wand positioniert und mit verlängerten Be- und Entlüftungskanälen versehen ist;
- Figur 5: ein fünftes Ausführungsbeispiel der erfindungsgemäßen Brandschutzeinrichtung mit einem wandhängenden Brandschutzgehäuse mit offener Rückseite, das direkt fluchtend vor den Be- und Entlüftungskanälen an einer Wand positioniert ist; und
- Figur 6: ein sechstes Ausführungsbeispiel der erfindungsgemäßen Brandschutzeinrichtung mit einem wandhängenden, geschlossenen Brandschutzgehäuse, das vor den Be- und Entlüftungskanälen an einer Wand positioniert ist.

Die in den Figuren dargestellte Brandschutzeinrichtung besteht in bekannter Weise aus einem einen feuerwiderstandsfähigen Raumbereich bzw. Brandabschnitt 1 bildenden Raum, in dem ein eine sicherheitstechnische Anlage 2 aufnehmendes und sowohl mit einer Be- als auch mit einer Entlüfungsöffnung 3 versehenes Brandschutzgehäuse 4 angeordnet ist.

Das typischerweise quaderförmige und, abgesehen von den Beund Entlüftungsöffnungen 3, rauchdichte Brandschutzgehäuse 4 ist dabei vorzugsweise aus Plattenelementen gebildet und weist zur Bedienung der sicherheitstechnischen Anlage 2 eine Tür oder dergleichen auf (nicht extra dargestellt). Die in den Figuren sehr schematisch dargestellte sicherheitstechnische Anlage 2 ist dabei insbesondere wahlweise als Sicherheitsbeleuchtungsanlage, Brandmeldeanlage, Anlage zur Alarmierung und Erteilung von Anweisungen, natürliche und maschinelle Rauchabzugsanlage, Rauchschutz-Druckanlage, Personenaufzug mit Brandfallsteuerung, Wasserdruckerhöhungsanlage (Sprinkler), Bettenaufzug, Feuerwehraufzug oder dergleichen ausgebildet, deren Funktion im Brandfall zumindest für einen bestimmten Zeitraum erhalten bleiben muss.

Wesentlich für alle Ausführungsformen der erfindungsgemäßen Brandschutzeinrichtung ist nun, dass die auch im Brandfall unverschlossenen Be- und Entlüftungsöffnungen 3 jeweils mit einem in einen weiteren, außerhalb des Raumes angeordneten Brandabschnitt 5 ausmündenden Be- und Entlüftungskanal 6 verbunden sind.

Wie aus den Figuren, die allerdings stets lediglich nur einen Teil des jeweiligen Brandabschnitts zeigen, ersichtlich, ist dabei zwischen den beiden Brandabschnitten 1, 5 ein feuerwiderstandsfähiges Trennelement 7 wie Wand, Decke und/oder Boden angeordnet. Dieses Trennelement 7 erfüllt dabei die Feuerwiderstandsklasse, die der notwendigen Dauer des Funktionserhaltes der sicherheitstechnische Anlage 2 im Brandfall entsprechen soll, zum Beispiel feuerhemmend (30 Minuten), hochfeuerhemmend (60 Minuten) oder feuerbeständig (90 Minuten oder höher) (siehe hierzu auch https://de.wikipedia.org/w/index.php? title=Feuerwiderstand&oldid=146045943). Bezüglich des Brandschutzgehäuses 4 und der Be- und Entluftkanäle 6 ist weiterhin vorgesehen, dass diese ebenfalls mindestens eine Feuerwiderstandsklasse erfüllen, die einer notwendigen Dauer eines Funktionserhalts der sicherheitstechnischen Anlage 2 im Brandfall entspricht. Dabei ist weiterhin die Feuerwiderstandsklasse des Trennelements 7 stets mindestens genauso groß oder größer als die Feuerwiderstandsklasse des Be- und Entlüftungskanals 6.

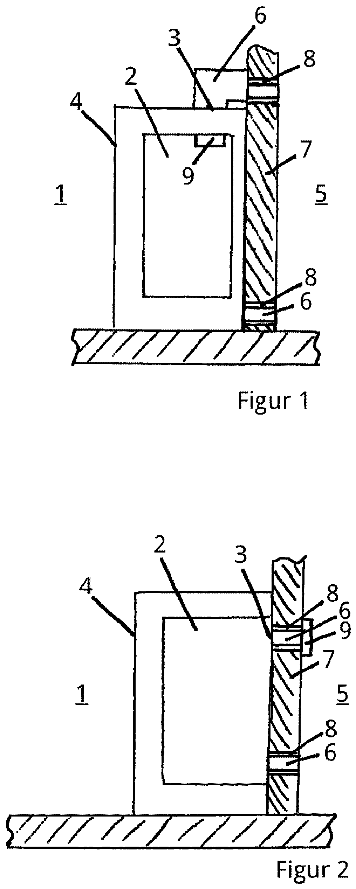

Wie der Vergleich der Figuren zeigt, kann der genannte Be- und Entlüftungskanal 6 dabei auf unterschiedliche Weise gebildet sein: Die Figuren 2, 5 und 6 zeigen eine Lösung, bei der dieser letztlich einfach als Öffnung im Trennelement 7 ausgebildet ist. Die Figuren 1, 3 und 4 zeigen dagegen eine Lösung, bei der der Be- und Entlüftungskanal 6 im Grunde zweiteilig ausgebildet ist, nämlich einerseits aus der schon genannten Öffnung im Trennelement 7 (also letztlich zum Beispiel ein Wanddurchbruch) und andererseits aus einem sich an die Öffnung anschließenden und bis zum Brandschutzgehäuse 4 reichenden Luftkanal, der mindestens den gleichen Feuerwiderstand wie das Brandschutzgehäuse 4 aufweist.

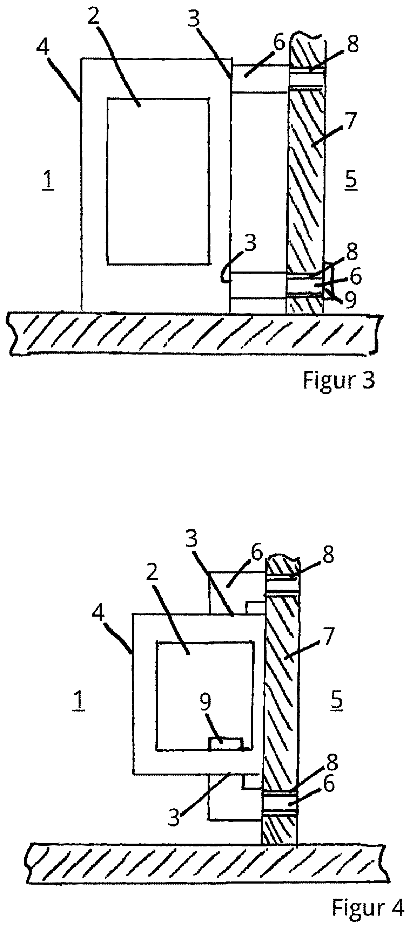

Wie weiterhin aus den Figuren ersichtlich, ist das Brandschutzgehäuse 4 wahlweise bodenstehend (vergleiche Figur 1, 2 und 3) oder wandhängend (vergleiche Figur 4, 5 und 6) ausgebildet. Ferner ist bei der Ausführungsform gemäß Figur 3 vorgesehen, dass das Brandschutzgehäuse 4 frei stehend im Brandabschnitt 1 ausgebildet ist.

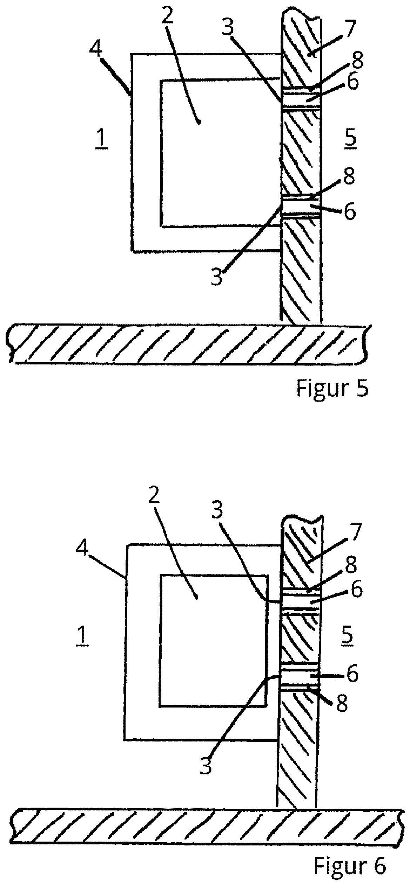

Darüber hinaus kann zum Beispiel bei den Ausführungsformen gemäß Figur 2 und 5 vorgesehen sein, dass das Brandschutzgehäuse 4 an einer Seite offen und mit dieser Seite gegen das Trennelement 7 gerichtet angeordnet ist, d. h. in diesem Fall übernimmt das Trennelement 7 gewissermaßen die Funktion zum Beispiel der Rückwand des Brandschutzgehäuses 4, wobei bei einer solchen einseitig offenen Ausbildung des Brandschutzgehäuses 4 die Be- und/oder Entlüftungsöffnung 3 letztlich durch einen brandschutzgehäuseseitigen Teil des im Trennelement 7 ausgebildeten Be- und/oder Entlüftungskanals 6 gebildet werden. Nochmals in anderen Worten: Wird zum Beispiel die Rückwand des Brandschutzgehäuses 4 durch das Trennelement 7, also insbesondere eine Gebäudewand, gebildet, so sind die Be- und Entlüftungsöffnungen 3 durch das brandschutzgehäuseseitige Ende des Be- und Entlüftungskanals 6, welcher im Trennelement 7 ausgebildet ist, (sprich: durch eine Öffnung im Trennelement 7) definiert.

Falls, was selbstverständlich auch geschehen kann, im weiteren Brandabschnitt 5 ein Brandfall eintreten sollte, ist weiterhin bevorzugt vorgesehen, dass mindestens an dem dem weiteren Brandabschnitt 5 zugewandten Ende des Be- und Entlüftungskanals 6 ein selbsttätig schließendes Brandschott 8 angeordnet bzw. der Entlüftungskanal 6 im feuerwiderstandsfähigen Trennelement 7 grundsätzlich mit einem Schott 8 versehen ist, um einen Brandüberschlag aus dem anderen Brandabschnitt 5 in den Brandabschnitt 1 zu verhindern. Ein solches Brandschott 8 umfasst dabei in bekannter Weise insbesondere eine temperaturempfindliche Masse, zum Beispiel Blähgraphit, die im Brandfall massiv expandiert und auf diese Weise einen Zugang zum Be- und Entlüftungskanal 6 verschließt.

Für den Fall, dass eine passive, letztlich durch die verschiedenartige Dichte unterschiedlich stark erhitzter Luftvolumina bedingte Belüftung des Brandschutzgehäuses 4 bei der eingesetzten sicherheitstechnische Anlage 2 nicht ausreichend sein sollte, ist weiterhin vorgesehen, dass dem Be- und/oder Entlüftungskanal 6 zur Zwangsbelüftung des Brandschutzgehäuses 4 ein Lüfter 9 zugeordnet ist. Dieser Lüfter 9 ist dabei wahlweise im Brandschutzgehäuse 4 (vergleiche Figur 1 und 4) oder im weiteren Brandabschnitt 5 (vergleiche Figur 2 und 3) angeordnet. Wie eingangs bereits beschrieben, ergibt sich durch die erfindungsgemäße Lösung die sehr vorteilhafte Möglichkeit, die Brandprüfung des Brandschutzgehäuses 4 unabhängig von der verwendeten sicherheitstechnischen Anlage 2 durchzuführen, da die Abfuhr des Wärmeeintrags durch die sicherheitstechnische Anlage 2 selbst letztlich insbesondere durch den Lüfter 9, dessen Fördermaß einfach auszulegen ist, erfolgt.

### Bezugszeichenliste

- 1: Brandabschnitt
- 2: sicherheitstechnische Anlage
- 3: Be- und Entlüftungsöffnung
- 4: Brandschutzgehäuse
- 5: weiterer Brandabschnitt
- 6: Be- und Entlüftungskanal
- 7: Feuerwiderstandsfähiges Trennelement
- 8: Brandschott
- 9: Lüfter

## Patentansprüche

1. Brandschutzeinrichtung, umfassend einen einen Brandabschnitt (1) bildenden Raum, in dem ein eine sicherheitstechnische Anlage (2) aufnehmendes und sowohl mit einer Be- als auch mit einer Entlüfungsöffnung (3) versehenes Brandschutzgehäuse (4) angeordnet ist,
**dadurch gekennzeichnet,**
**dass** die auch im Brandfall unverschlossenen Be- und Entlüftungsöffnungen (3) jeweils mit einem in einen weiteren, außerhalb des Raumes angeordneten Brandabschnitt (5) ausmündenden Be- und Entlüftungskanal (6) verbunden sind.

2. Brandschutzeinrichtung nach Anspruch 1,
**dadurch gekennzeichnet,**
**dass** zwischen den beiden Brandabschnitten (1, 5) wahlweise ein feuerwiderstandsfähiges Trennelement (7) wie Wand, Decke und/oder Boden angeordnet ist.

3. Brandschutzeinrichtung nach Anspruch 2,
**dadurch gekennzeichnet,**
**dass** der Be- und Entlüftungskanal (6) wahlweise selbst feuerwiderstandsfähig ausgebildet und/oder durch eine Öffnung im Trennelement (7) gebildet ist.

4. Brandschutzeinrichtung nach einem der Ansprüche 1 bis 3,
**dadurch gekennzeichnet,**
**dass** mindestens an dem dem weiteren Brandabschnitt (5) zugewandten Ende des Be- und Entlüftungskanals (6) ein sich im Brandfall im weiteren Brandabschnitt (5) selbsttätig schließendes Brandschott (8) angeordnet ist.

5. Brandschutzeinrichtung nach einem der Ansprüche 1 bis 4,
**dadurch gekennzeichnet,**
**dass** dem Be- und/oder Entlüftungskanal (6) zur Zwangsbelüftung des Brandschutzgehäuses (4) ein Lüfter (9) zugeordnet ist.

6. Brandschutzeinrichtung nach Anspruch 5,
**dadurch gekennzeichnet,**
**dass** der Lüfter (9) wahlweise im Brandschutzgehäuse (4) oder im weiteren Brandabschnitt (5) angeordnet ist.

7. Brandschutzeinrichtung nach einem der Ansprüche 1 bis 6,
**dadurch gekennzeichnet,**
**dass** das Brandschutzgehäuse (4) und der Be- und Entlüftungskanal (6) mindestens eine Feuerwiderstandsklasse erfüllen, die einer notwendigen Dauer eines Funktionserhalts der sicherheitstechnischen Anlage (2) im Brandfall entspricht.

8. Brandschutzeinrichtung nach einem der Ansprüche 1 bis 7,
**dadurch gekennzeichnet,**
**dass** das Brandschutzgehäuse (4) wahlweise bodenstehend oder wandhängend ausgebildet ist.

9. Brandschutzeinrichtung nach einem der Ansprüche 2 bis 8,
**dadurch gekennzeichnet,**
**dass** das Brandschutzgehäuse (4) an einer Seite offen und mit dieser Seite gegen das Trennelement (7) gerichtet angeordnet ist.

10. Brandschutzeinrichtung nach Anspruch 9,
**dadurch gekennzeichnet,**
**dass** bei einseitig offener Ausbildung des Brandschutzgehäuses (4) die Be- und/oder Entlüftungsöffnung (3) durch einen brandschutzgehäuseseitigen Teil des im Trennelement 7 ausgebildeten Be- und/oder Entlüftungskanals (6) gebildet werden.
